# FASCICULE DE BREVET EUROPEEN

(11) **EP 3 729 548 B1**
(45) Date de publication et mention de la délivrance du brevet: **03.11.2021**
(21) Numéro de dépôt: 18842427.9
(22) Date de dépôt: 14.12.2018
(51) Int. Cl.: H01M 8/0202, H01M 8/0282, H01M 8/0271, H01M 8/0273, H01M 8/0276, H01M 8/028, H01M 8/0284, H01M 8/124

(54) **INTERCONNECTEUR À ÉTAT DE SURFACE DÉGRADÉ POUR LA TENUE DES ÉTANCHÉITÉS**
INTERKONNEKTOR MIT AUFGEBRAUCHTEN OBERFLÄCHE FÜR DEN HALT DER ABDICHTUNG
INTERCONNECTOR WITH DEGRADED SURFACE STATE FOR MAINTAINING THE SEALING

(30) Priorité: 19.12.2017 FR 1762483
(43) Date de publication de la demande: 28.10.2020
(73) Titulaire: Commissariat à l'énergie atomique et aux énergies alternatives, 75015 Paris (FR)
(72) Inventeur: PLANQUE, Michel, 38180 SEYSSINS (FR); BERNARD, Charlotte, 74130 CONTAMINE SUR ARVE (FR)
(74) Mandataire: Brevalex
(86) Numéro de dépôt international: PCT/FR2018/053296
(87) Numéro de publication internationale: WO 2019/122631

(56) Documents cités:
- EP-A1- 2 936 595
- CELIK SELAHATTIN ET AL: "Influential parameters and performance of a glass-ceramic sealant for solid oxide fuel cells", CERAMICS INTERNATIONAL, ELSEVIER, AMSTERDAM, NL, vol. 41, no. 2, 23 octobre 2014 (2014-10-23), pages 2744-2751, XP029106074, ISSN: 0272-8842, DOI: 10.1016/J.CERAMINT.2014.10.089
- JEFFREY W. FERGUS: "Sealants for solid oxide fuel cells", JOURNAL OF POWER SOURCES, ELSEVIER SA, CH, vol. 147, no. 1-2, 9 septembre 2005 (2005-09-09), pages 46-57, XP027756688, ISSN: 0378-7753 [extrait le 2005-09-09]
- CHOU Y.-S. AND J. W. STEVENSON: "COMPRESSIVE MICA SEALS FOR SOLID OXIDE FUEL CELLS", JOURNAL OF MATERIALS ENGINEERING AND PERFORMANCE, ASM INTERNATIONAL, MATERIALS PARK, OH, US, vol. 15, no. 4, 1 août 2006 (2006-08-01), pages 414-421, XP001540102, ISSN: 1059-9495, DOI: 10.1361/105994906X117215

## Description

### DOMAINE TECHNIQUE ET ART ANTÉRIEUR

La présente demande se rapporte au domaine des dispositifs électrochimiques et plus précisément à la mise en œuvre de structures d'étanchéité améliorées dans de tels dispositifs.

Elle s'applique notamment à des dispositifs électro-chimiques de type pile à combustible, en particulier à oxyde solide (« SOFC » pour « Solid Oxide Fuel Cell ») ou de type électrolyseur tels que ceux à vapeur d'eau haute température (EHT, ou EVHT pour électrolyse de la vapeur d'eau à haute température, ou HTE acronyme anglais pour « High Temperature Electrolysis », ou encore HTSE acronyme anglais pour « High Temperature Steam Electrolysis ») également à oxydes solides (SOEC : pour « Solid Oxide Electrolyte Cell »).

D'une manière générale, de tels dispositifs électrochimiques comprennent un empilement (« stack » selon la terminologie anglo-saxonne) de modules élémentaires, encore appelés « cellules électrochimiques », mis en série.

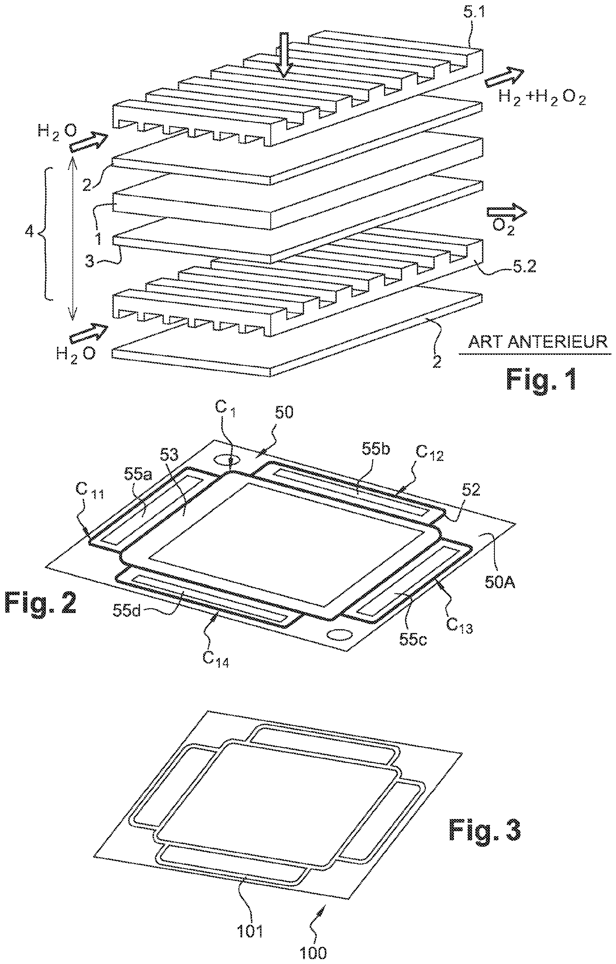

Chaque module élémentaire peut être, comme illustré sur la figure 1, formé d'un assemblage 4 d'un électrolyte 1 avec deux électrodes : une anode 2 et une cathode 3. L'assemblage 4 est généralement enserré entre deux plaques d'interconnexion 5.1, 5.2 également appelées « interconnecteurs ». Un électrolyseur complet est ainsi formé d'un empilement comportant une alternance de cellules et d'interconnecteurs. Les interconnecteurs 5.1, 5.2 sont électriquement conducteurs. Une fonction des interconnecteurs 5.1, 5.2 est donc d'alimenter une cellule électrochimique en courant électrique. Hormis des interconnecteurs d'extrémité de l'empilement, les interconnecteurs comportent typiquement une première face en contact avec la cathode d'une cellule et une face principale, opposée à la première face, en contact avec l'anode d'une autre cellule.

Les interconnecteurs 5.1, 5.2 peuvent participer en outre à la distribution et/ou la récupération de gaz produits tout en séparant les compartiments anodiques et cathodiques de deux cellules adjacentes.

Le bon fonctionnement de ce type d'empilement requiert une isolation électrique entre deux interconnecteurs successifs sous peine de court-circuiter la cellule.

On cherche également à assurer une étanchéité entre différents compartiments afin d'éviter une recombinaison de gaz intempestive susceptible d'entraîner une baisse de rendement et une possible apparition de points chauds causes d'endommageant de l'empilement.

Les documents FR2988916A1, FR3014246A1, et FR3000108 donnent différents exemples de joints isolant assurant l'étanchéité dans un dispositif électrochimique de type SOEC ou SOFC, le joint d'étanchéité comportant typiquement un matériau de liaison tel que du verre destiné à former une cloison étanche isolante et disposé dans un support d'accueil isolant mis en contact avec un interconnecteur. Le support isolant est généralement formé d'un cadre en mica.

Dans certains cas, des fuites peuvent apparaitre au niveau de ces joints d'isolation, ce qui peut rendre la cellule électrochimique attenante défectueuse.

Il se pose donc le problème de pouvoir améliorer l'étanchéité des dispositifs électrochimiques, en particulier de type SOEC ou SOFC.

### EXPOSÉ DE L'INVENTION

Selon un aspect, un mode de réalisation de la présente invention prévoit une structure pour dispositif électrochimique, en particulier de type pile à combustible à oxyde solide (SOFC) ou de type électrolyseur de vapeur d'eau à haute température à oxyde solide (SOEC), la structure comprenant au moins un élément de support conducteur d'interconnecteur caractérisé par au moins une première face ayant au moins une région rugueuse localisée, ladite région rugueuse étant apte à être mise en contact avec un matériau de liaison isolant d'un joint d'étanchéité.

L'élément de support conducteur peut être par exemple sous forme d'une plaque, ou tôle, métallique, ou de plusieurs tôles ou plaques métalliques assemblées.

L'interconnecteur peut quant à lui être formé d'un élément de support ou de plusieurs éléments de support conducteurs assemblés. Ainsi, l'interconnecteur peut être lui-même formé d'une plaque ou d'une tôle, voire de plusieurs plaques, ou de plusieurs tôles empilées.

Le matériau de liaison isolant apposé sur la région rugueuse est typiquement à base de verre ou de vitro-céramique.

En dégradant ou modifiant l'état de surface d'une région donnée de l'interconnecteur rendue ainsi rugueuse, on améliorer l'accroche du joint d'étanchéité et plus précisément du matériau de liaison en verre ou vitro-céramique mis en contact avec cette région donnée de l'interconnecteur.

La structure peut comprendre en outre un support isolant qui supporte ou accueille le matériau de liaison isolant, en particulier à base de verre ou de vitro-céramique.

Le support isolant peut être doté d'une ouverture centrale adaptée pour accueillir au moins une cellule électrochimique. Dans ce cas, le matériau de liaison isolant peut être sous forme d'au moins un cordon en contact avec ladite région rugueuse et réparti autour de ladite ouverture centrale.

Avantageusement, lorsque le support isolant comporte une ou plusieurs ouvertures périphérique(s) disposée(s) autour de l'ouverture centrale, un ou plusieurs autres cordons en matériau de liaison isolant sont répartis respectivement autour desdites une ou plusieurs ouvertures périphériques.

Avantageusement, la région rugueuse a un agencement sur la première face selon au moins un motif donné formant un ou plusieurs contours fermés, le ou les cordons en contact avec ladite région rugueuse étant agencés selon un motif reproduisant ledit motif donné.

L'élément de support conducteur est doté d'au moins une deuxième face opposée à la première face et qui peut comporter également au moins une autre région rugueuse localisée.

Dans ce cas, cette autre région rugueuse localisée peut être mise en contact avec un autre joint d'étanchéité.

Cet autre joint d'étanchéité peut être disposé entre ledit interconnecteur et un autre interconnecteur. Dans ce cas, l'autre joint d'étanchéité peut être en contact avec une région rugueuse formée sur une face de cet autre interconnecteur.

Selon une possibilité de mise en œuvre, ledit élément de support conducteur peut être disposé contre une face principale d'un support électriquement isolant, tandis qu'un autre interconnecteur est disposé contre une autre face principale de ce support électriquement isolant opposée à ladite face principale. Dans ce cas, le support isolant peut être avantageusement doté d'au moins une lumière traversante remplie par ledit matériau de liaison isolant du joint d'étanchéité, la lumière traversante s'étendant entre ladite face principale et ladite autre face principale, de sorte que le matériau de liaison isolant disposé dans ladite lumière traverse le support électriquement isolant et est disposé en contact avec une région rugueuse de cet autre interconnecteur.

Selon un autre aspect, un mode de réalisation de la présente invention prévoit un procédé de réalisation d'une structure pour dispositif électrochimique en particulier de type SOEC ou SOFC, comprenant des étapes de :
a) modification localisée de l'état de surface d'une région donnée d'une première face d'un élément de support conducteur d'un interconnecteur, de sorte à rendre cette région donnée rugueuse,
b) formation d'un joint d'étanchéité sur ledit élément de support conducteur, en disposant un matériau de liaison isolant, en particulier à base de verre ou de vitro-céramique, en contact de ladite région donnée rugueuse.

Dans un dispositif électrochimique SOFC ou SOEC suivant l'art antérieur, le joint d'étanchéité est monté au contact de portées ou éléments de supports métalliques sur une surface métallique lisse.

Avec le procédé de réalisation suivant l'invention, on forme une surface rugueuse puis le joint sur cette surface rugueuse, de sorte à obtenir un agencement d'étanchéité améliorée.

L'étape a) est avantageusement réalisée par projection de billes ou de particules ou de grains, à travers au moins un trou d'un masque de protection placé en regard de ladite première face dudit élément de support conducteur, le trou étant disposé en regard de la région donnée. On effectue ainsi un traitement localisé tout en protégeant d'autres zones de l'élément de support conducteur.

Dans un mode de réalisation particulier, l'élément de support conducteur peut être sous forme d'une première tôle (ou plaque) métallique, le procédé comprenant en outre, après l'étape a), l'assemblage de cette première tôle (ou plaque) métallique avec une ou plusieurs autres tôles (ou plaques) métalliques afin de former un interconnecteur.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 sert à illustrer un empilement classique dans un dispositif électrochimique et comportant une cellule électrochimique entre deux interconnecteurs ;
- la figure 2 sert à illustrer un interconnecteur pour dispositif électrochimique et doté d'au moins une région rugueuse localisée destinée à être mise en contact avec un matériau de joint d'isolation et d'étanchéité ;
- la figure 3 sert à illustrer un exemple de masque de protection susceptible d'être utilisé pour mettre en œuvre une modification localisée d'état de surface d'un interconnecteur à région rugueuse suivant l'invention ;
- les figures 4A-4C servent à illustrer un exemple d'agencement de joint d'isolation et d'étanchéité destiné à être apposé sur une région rugueuse d'un interconnecteur suivant l'invention ;
- les figures 5 et 6 servent à illustrer un exemple d'assemblage dans un dispositif électrochimique SOEC ou SOFC entre un cadre isolant, servant à de support à un joint d'isolation et d'étanchéité ainsi que de zone d'accueil d'au moins une cellule électrochimique, la cellule étant disposée entre des interconnecteurs à région rugueuse localisée tels que mis en œuvre suivant l'invention ;
- la figure 7 sert à illustrer un exemple d'empilement avec un interconnecteur dotés de régions rugueuses sur chacune de ses faces ;
Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

En outre, dans la description ci-après, des termes qui dépendent de l'orientation tels que « inférieure », « supérieure », « centrale », « périphérique » s'appliquent en considérant que la structure est orientée de la façon illustrée dans les figures.

### EXPOSÉ DÉTAILLÉ DE MODES DE RÉALISATION PARTICULIERS

Un exemple d'élément 50 de support d'interconnecteur est illustré sur la figure 2.

L'interconnecteur est destiné à être intégré à un dispositif électrochimique, en particulier de type électrolyseur tel que par exemple un électrolyseur de vapeur d'eau à haute température à oxyde solide (SOEC) ou bien de type pile à combustible tel que par exemple une pile à combustible à oxyde solide (SOFC).

L'interconnecteur peut ainsi remplir les mêmes fonctions que celle des interconnecteurs 5.1, 5.2 décrits précédemment en lien avec la figure 1.

L'élément de support 50 est à base d'un matériau conducteur de l'électricité, et peut être sous forme d'une tôle ou d'un assemblage de plusieurs tôles. Le matériau de l'élément de support 50 est typiquement métallique et de préférence apte à résister à la corrosion et à des températures élevées. On utilise par exemple un acier inoxydable ferrique, tel qu'un acier de nuance K41X (désigné selon la norme EP 10088-2 par: X2CrTiNb18 1. 4509, ou selon la norme US par : 43932, Type 441), ou par exemple des aciers à base nickel tel qu'un acier de type Inconel 600, marque déposée de la société Special Metals Corporation. L'élément de support 50 mis en œuvre suivant l'invention comporte une face 50A dotée d'une région rugueuse 52 localisée. La région rugueuse 52 a en particulier un paramètre de rugosité moyenne arithmétique Ra correspondant à la rugosité moyenne arithmétique de son profil qui est supérieure au reste de la face 51 ou au moins à d'autres zones 53 de la face 51 situées autour de la région rugueuse 52.

La rugosité de la région est une signature d'un type d'usinage. La rugosité peut prendre l'aspect de stries ou de sillons.

Par exemple, la région 52 rugueuse a un paramètre Ra de 3.2 à 50 µm (micromètres) ou appartient à une classe de rugosité comprise entre N8 et N12 si l'on considère l'ancienne norme afnor NF E 05-051 . Les autres zones 53 de la première face 50A autour de la région rugueuse 52 localisée ont une rugosité moyenne plus faible que celle de la région rugueuse 52. Si l'on considère par exemple un support 50 en acier laminé à froid d'épaisseur de l'ordre de 0.2 mm les autres zones 53 ont une rugosité moyenne comprise entre 0,2 et 0,5 µm (micromètres).

La région rugueuse 52 est agencée sur l'élément de support 50 en fonction de la disposition d'un joint d'étanchéité et plus particulièrement de celui d'un matériau isolant (non représenté sur cette figure) dit « de liaison », de ce joint d'étanchéité.

Ce matériau de liaison est typiquement à base de verre ou de vitro-céramique et prévu pour permettre d'accommoder les dilatations thermiques de différents éléments, en particulier des éléments de supports métalliques reliés par ce joint et qui appartiennent à différents interconnecteurs.

Dans l'exemple de réalisation illustré sur la figure 2, la région rugueuse 52 sur l'élément de support 50 forme un premier motif réalisant un contour fermé C1 disposé dans une zone périphérique de l'élément de support 50.

La région rugueuse 52 peut également comporter d'autres motifs disposés autour du premier motif et réalisant également d'autres contours fermés C11, C12, C13, C14. Ces autres motifs ont dans cet exemple particulier une partie commune avec le premier motif et sont agencés respectivement autour d'ouvertures 55a, 55b, 55c, 55d prévues dans l'élément de support 50.

La région rugueuse 52 résulte d'un traitement localisé sur un endroit spécifique de l'élément de support 50 visant à augmenter localement la rugosité du matériau constitutif de cet élément 50, en particulier à un endroit de la première face 50A destiné à accueillir le matériau de liaison de type verre ou en vitro-céramique du joint d'étanchéité. Par rapport aux surfaces habituellement lisses des interconnecteurs mis en œuvre suivant l'art antérieur, cette région rugueuse 52 permet d'améliorer l'accroche avec le verre ou le matériau vitro-céramique de sorte à permettre un meilleur ancrage du joint d'isolation et d'étanchéité à cet endroit.

Pour obtenir la région rugueuse 52, on peut partir d'un élément de support 50, par exemple sous forme d'une tôle ou d'un assemblage de tôles empilées, ou d'une plaque ou d'un assemblage de plaques empilées, comportant au moins une face dont on modifie localement l'état de surface, en particulier par usure mécanique ou abrasion.

On privilégie ce type de traitement par rapport par exemple à un traitement laser plus coûteux et qui, dans certains cas pourrait modifier par échauffement la structure interne du matériau de l'élément de support.

Avantageusement, on effectue la modification d'état de surface par projection d'éléments tels que des particules ou des billes, en particulier des micro-billes sur au moins une face 50A de l'élément de support 50. Les particules ou billes peuvent être abrasives afin de réaliser une altération par frottements. On utilise par exemple des particules ou des grains de sable ou des billes en acier, en verre ou en céramique, ou par exemple en coridon (Al₂O₃ ou α-Al₂O₃). On utilise typiquement des particules abrasives pouvant avoir une granulométrie comprise par exemple entre 0.1 et 2 mm.

Les gammes de dimensions des particules ou billes utilisées, la composition de ces particules, sont déterminés par l'Homme du métier en fonction de l'état de surface désiré, en particulier du paramètre Ra requis de profil de surface.

A titre d'exemple particulier, des grains de sable de diamètre de l'ordre de 0.1 mm peuvent être par exemple employées afin de d'augmenter le paramètre Ra de 0.6 à 3.2 sur la surface à traiter d'une tôle d'acier de l'ordre de 0.2 mm d'épaisseur. Le traitement peut être éventuellement réalisé avec des particules abrasives de tailles différentes.

La projection de particules en vue d'abraser peut être mise en œuvre par une technique de grenaillage ou de sablage. Les particules peuvent être projetées au moyen d'un flux d'air dont on règle la pression en fonction de la rugosité désirée. Les particules sont de préférence projetées à une vitesse élevée par exemple de l'ordre de 100 m/s, et de manière continue pendant une durée qui peut être comprise par exemple entre 1 et 3 secondes, sur la surface à traiter. Là encore, la durée et la vitesse de projection sont déterminées par l'Homme du métier en fonction de l'état de surface désiré. Sous une action de martelage ou de matage ou d'écrouissage, la surface traitée dépasse sa limite d'élasticité et subit une déformation plastique sur une épaisseur qui peut être très faible et comprise par exemple entre plusieurs centièmes et plusieurs dixièmes de millimètre. A titre d'exemple particulier, pour un interconnecteur d'épaisseur de l'ordre de 0.2 mm, on peut réaliser une abrasion de surface selon une profondeur qui peut atteindre par exemple 0.05 mm.

La région rugueuse 52 peut être obtenue par une autre technique, dite de « microbillage », dans laquelle on projette des microbilles en verre ou céramique. Avec une telle technique, on peut modifier la rugosité sans abîmer ou tout au moins sans trop altérer la surface soumise au traitement.

Une mesure de rugosité mise en œuvre à l'aide d'un rugosimètre peut être effectuée une fois le traitement de surface réalisé. En fonction du résultat de cette mesure, on pourra réitérer ou non l'étape de modification d'état de surface de la région 52 de l'élément de support 50.

Pour permettre de réaliser une modification localisée de la région 52 sans altérer d'autres zones 53 de la face 51 de l'élément 50 de support, on réalise de préférence cette projection en utilisant un masque de protection.

Un exemple de masque de protection 100 susceptible d'être utilisé pour former la région rugueuse 52 est illustré par exemple sur la figure 3. Le masque 100 comporte au moins un trou dans cet exemple sous forme d'au moins une fente 101 dont le motif correspond à celui que l'on souhaite attribuer à la région rugueuse 52. Lors du traitement par projection de particules pour former la région 52 rugueuse, en particulier par grenaillage ou microbillage ou sablage, on dispose typiquement le masque 100 en contact direct avec l'élément de support 50. Comme vu précédemment, la région rugueuse 52 peut avoir un agencement correspondant à celui du matériau de liaison isolant 77 du joint d'étanchéité destiné à être apposé sur la face 51 de l'élément de support 50. Ainsi, dans l'exemple de réalisation particulier illustré sur la figure 3, le masque de protection 100 comporte une fente 101 reproduisant les contours C1, C11, C12, C13, C14.

Un interconnecteur peut être formé d'un élément de support en une seule pièce ou résulter d'un assemblage de plusieurs éléments de support conducteurs ou métalliques, par exemple sous forme de tôles ou de plaques métalliques assemblées. Dans ce cas, on peut réaliser le traitement pour former la région rugueuse, soit sur l'assemblage final ou bien sur un ou plusieurs éléments (tôle(s)) destiné(s) à accueillir un matériau d'étanchéité avant réaliser cet assemblage.

Le traitement pour former la ou les régions rugueuse peut même être mis en œuvre avant une ou plusieurs étapes d'usinage, en particulier par laser, utilisée(s) lors de la fabrication de l'interconnecteur. Ainsi, le traitement visant à augmenter localement la rugosité peut être réalisé avant découpage des tôles ou avant usinage des tôles une fois découpées.

Après l'étape de projection de particules, on peut avantageusement procéder à une étape de nettoyage afin d'éviter une présence de particules dans le dispositif final. Ce nettoyage peut être réalisé par soufflage en utilisant par exemple un flux d'air comprimé. Lorsque le traitement de surface par projection de particules est réalisé avant assemblage d'éléments de supports ou de tôles, on évite ainsi une présence intempestive de particules entre ces tôles.

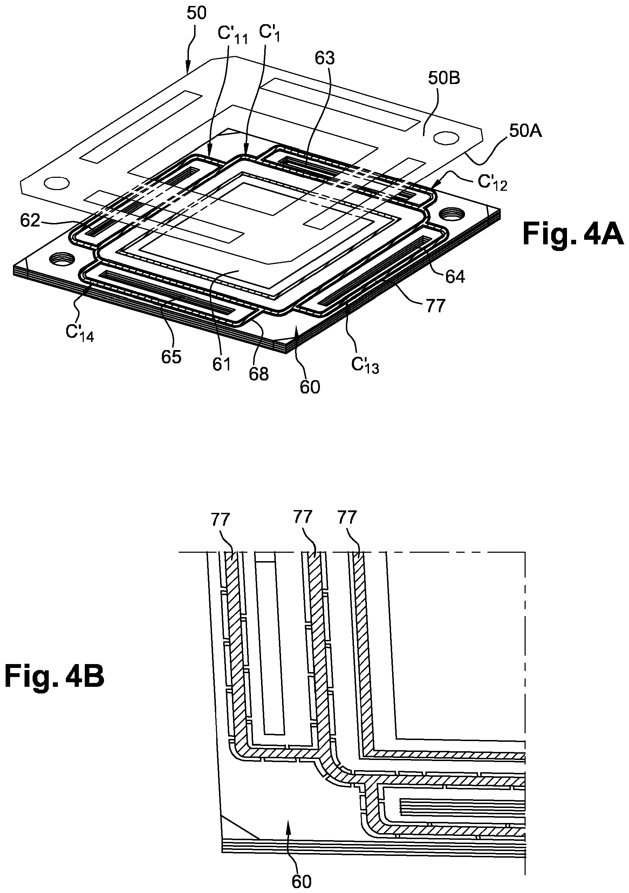

On se réfère à présent aux figures 4A, 4B, montrant (sur des vues respectivement globale et partielle en perspective) un support 60, en matériau isolant électrique permettant d'assurer une cohésion mécanique tout en remplissant une fonction d'isolation électrique. Ce support 60 est apte à être assemblé avec un interconnecteur ou élément de support d'interconnecteur tel que décrit précédemment.

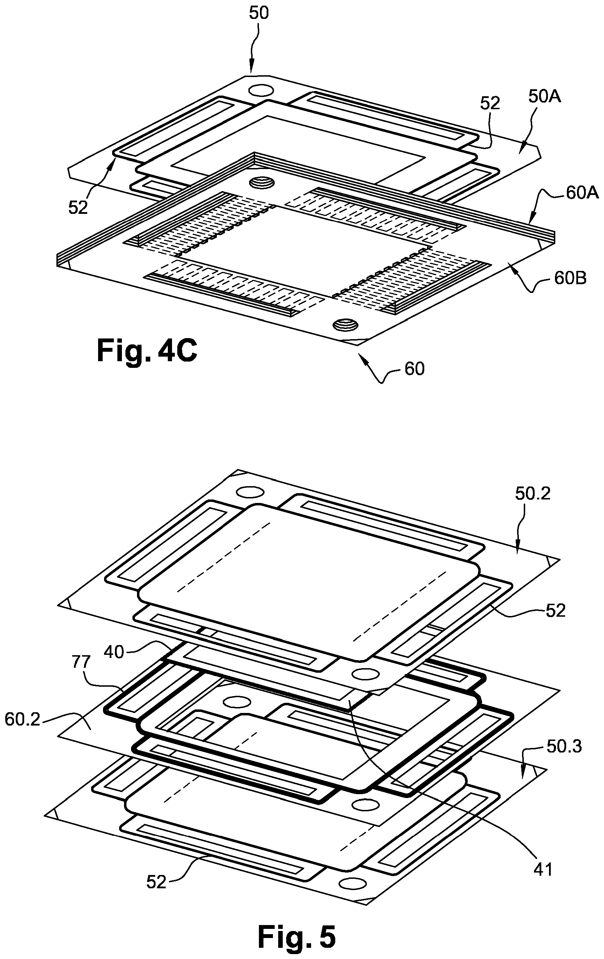

Dans l'exemple illustré, le support 60 est sous forme d'un cadre, par exemple en mica. Des lumières 68 sont prévues dans le support isolant 60 et permettent d'accueillir un matériau de liaison isolant 77 évoqué précédemment et qui est destiné à être mis en contact avec la région rugueuse 52 disposée sur la première face 50A. Cette première face 50A et région rugueuse 52 associée ne sont pas visibles sur la vue de dessus de la figure 4B mais montrées sur la vue de dessous et en perspective de la figure 4C.

Les lumières 68 permettent au matériau de liaison isolant 77 d'être présent au niveau de faces principales opposées 60A, 60B du support isolant 60. Le matériau de liaison isolant 77, de type verre ou vitrocéramique, vient remplir les lumières 68 réalisées dans le support isolant 60 pour y former des cloisons étanches. Le matériau de liaison isolant 77 est dans cet exemple sous forme d'une ou plusieurs bandes ou cordons en verre ou en matériau vitrocéramique agencé(e)s dans les lumières 68 du support 60 et réalisant un ou plusieurs contours continus.

Le matériau de liaison 77 est typiquement déposé dans les lumières 68 sous forme d'une pâte de verre ou de vitro-céramique par exemple à l'aide d'un robot.

Différents matériaux en verre ou vitrocéramique utilisables pour former le joint d'étanchéité sont donnés par exemple dans le document FR 2 947 540 ou dans le document FR 2988 916 ou bien dans le document FR3014246, émanant de la demanderesse.

Le support isolant 60 peut être doté d'une ouverture centrale 61 adaptée pour recevoir au moins une cellule électrochimique ou un empilement de cellules électrochimiques, par exemple de type SOEC ou SOFC. Dans l'exemple de réalisation illustré, le support isolant 60 est également doté d'ouvertures périphériques 62, 63, 64, 65, en particulier de forme longilignes réparties autour de l'ouverture centrale 61.

L'agencement du matériau isolant de liaison 77 disposé dans la ou les lumière(s) 68 suit ainsi un motif particulier dans le support isolant 60 qui peut reproduire celui de la région rugueuse 52.

Dans l'exemple particulier illustré, les lumières 68 remplies de matériau isolant 77 se rejoignent et sont reliées entre elles pour former un contour central C'1 continu autour de l'ouverture centrale 61 et d'autres contours fermés disposés C'11, C'12, C'13, C'14 autour du contour central C'1 et respectivement autour des ouvertures périphériques 62, 63, 64, 65. Dans cet exemple, les contours C'1, C'11, C'12, C'13, C'14 ont un agencement semblable à celui des contours C1, C11, C12, C13, C14 de la région rugueuse 52 de l'interconnecteur décrit précédemment.

Le support ou cadre isolant 60 décrit précédemment est amené à être intercalé entre deux interconnecteurs avec de préférence chacun des interconnecteurs ou élément de support 50 comportant une région rugueuse 52 disposée contre le matériau isolant de liaison 77 à base de verre ou de vitro-céramique.

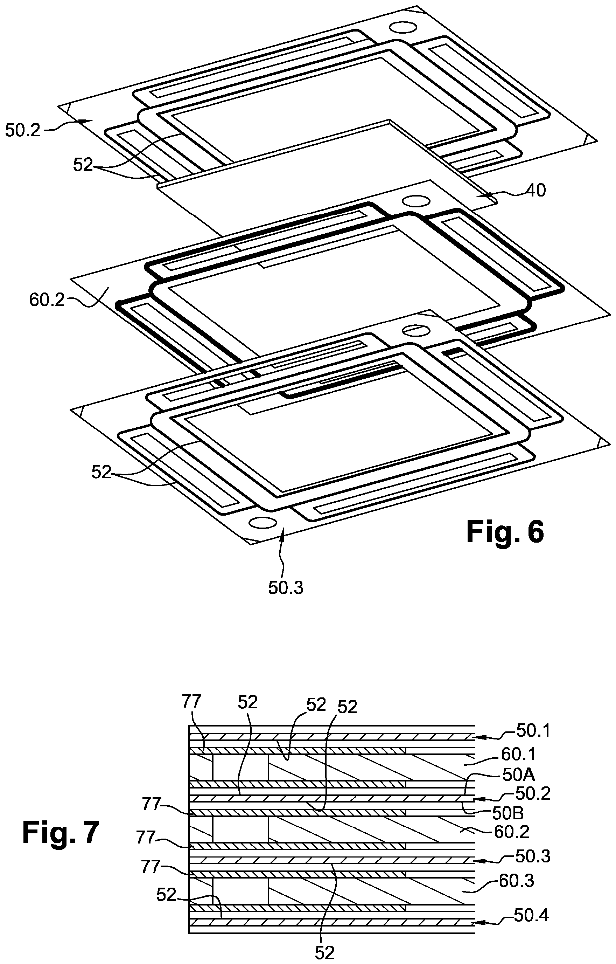

Les figures 5 et 6 illustrent par le biais de vues en éclaté un tel assemblage, avec une cellule électro-chimique 40 SOEC ou SOFC disposée à l'intérieur du cadre isolant 60 et agencée entre des interconnecteurs 50.2, 50.3. La cellule 40 peut être elle-même revêtue à proximité de ses bords d'un matériau 41 de type verre ou vitro-céramique formant joint d'isolation et d'étanchéité.

Dans l'empilement final de l'électrolyseur SOEC ou de la pile SOFC un interconnecteur 50.2 peut être lui-même intercalé entre deux supports isolants 60.1, 60.2 du type de ceux décrits précédemment. Ainsi, comme cela est illustré dans l'assemblage (représenté de manière schématique en coupe transversale) sur la figure 7, un même interconnecteur 50.2 peut être pourvu d'une région rugueuse 52 sur sa première face 50A (dans l'exemple illustré sa face supérieure), et d'une région rugueuse sur une deuxième face 50B (ici sa face inférieure) opposée à la première face 50A, chacune de ces régions rugueuses 52 étant en contact avec un matériau 77 de type verre ou vitro-céramique formant joint d'isolation et d'étanchéité.

## Revendications

1. Structure pour dispositif électrochimique, en particulier de type pile à combustible à oxyde solide (SOFC) ou de type électrolyseur de vapeur d'eau à haute température à oxyde solide (SOEC), la structure comprenant au moins un élément de support conducteur (50) d'un interconnecteur (50.1) doté d'au moins une première face (50A) ayant au moins une région rugueuse (52) localisée, ladite région rugueuse (52) localisée ayant un paramètre de rugosité moyenne arithmétique correspondant à la rugosité moyenne arithmétique de son profil qui est supérieure au reste de ladite première face, ladite région rugueuse (52) localisée étant en contact avec un matériau de liaison isolant d'un joint d'étanchéité.

2. Structure selon la revendication 1, dans lequel le matériau de liaison isolant (77), en particulier à base de verre ou de vitro-céramique, est monté en contact sur ladite région rugueuse (52) de l'élément de support conducteur (50), ladite structure comportant en outre un support isolant (60) qui supporte ou accueille le matériau de liaison isolant (77), en particulier à base de verre ou de vitro-céramique.

3. Structure selon la revendication 2, dans lequel le support isolant (60) comporte une ouverture centrale (61), adaptée pour accueillir au moins une cellule électrochimique, le matériau de liaison isolant (77) étant sous forme d'au moins un cordon en contact avec ladite région rugueuse (52) et réparti autour de ladite ouverture centrale (61).

4. Structure selon la revendication 3, dans lequel le support isolant (60) comporte une ou plusieurs ouvertures périphérique(s) (62, 63, 64, 65) disposée(s) autour de l'ouverture centrale (61), le matériau de liaison isolant (77) étant sous forme d'un ou plusieurs autres cordons en contact avec une région rugueuse (52), le ou les autres cordons étant répartis respectivement autour desdites une ou plusieurs ouvertures périphériques (62, 63, 64, 65).

5. Structure selon l'une des revendications 3 ou 4, dans laquelle ladite région rugueuse (52) a un agencement sur la première face selon au moins un motif donné formant un ou plusieurs contours fermés (C1, C11, C12, C13, C14), le ou les cordons en contact avec ladite région rugueuse (52) étant agencés selon un motif reproduisant ledit motif donné.

6. Structure selon l'une des revendications 1 à 5, dans lequel l'élément de support conducteur (50) est doté d'au moins une deuxième face (50B) opposée à la première face (50A) ayant au moins une autre région rugueuse (52) localisée, ladite autre région rugueuse (52) localisée sur la deuxième face (50B) étant mise en contact avec un autre joint d'étanchéité.

7. Structure selon la revendication 6, dans lequel l'autre joint d'étanchéité est disposé entre ledit interconnecteur (50.1) et un autre interconnecteur (50.2), l'autre joint d'étanchéité étant en contact avec une région rugueuse (52) localisée formée sur une face de cet autre interconnecteur (50.2).

8. Structure selon l'une des revendications 1 à 5, dans laquelle ledit élément de support conducteur (50) est disposé contre une première face principale d'un support électriquement isolant (60), et dans laquelle un autre interconnecteur (50.2) est disposé contre une deuxième face principale du support électriquement isolant (60) opposée à la première face principale, le support isolant (60) étant doté d'au moins une lumière (68) remplie par ledit matériau de liaison isolant (77) du joint d'étanchéité, la lumière (68) étant traversante et s'étendant entre la première face principale et une deuxième face principale, de sorte que le matériau de liaison isolant (77) disposé dans ladite lumière (68) traverse le support électriquement isolant (60) et est disposé en contact avec une région rugueuse de cet autre interconnecteur (50.2).

9. Procédé de réalisation d'une structure selon l'une des revendications 1 à 8, comprenant des étapes de :
a) modification localisée de l'état de surface d'une région donnée de la première face de l'élément de support conducteur (50), de sorte à rendre rugueuse ladite région donnée,
b) formation du joint d'étanchéité sur l'élément de support conducteur (50), le matériau de liaison isolant, en particulier à base de verre ou de vitro-céramique, le matériau de liaison isolant étant disposé en contact de ladite région donnée.

10. Procédé selon la revendication 9, dans lequel la modification localisée est réalisée par projection de billes ou de particules ou de grains, à travers au moins un trou (101) d'un masque (100) de protection placé en regard de ladite première face dudit élément de support conducteur (50), le trou (101) étant disposé en regard de la région donnée.

11. Procédé selon l'une des revendications 9 ou 10, dans lequel l'élément de support conducteur (50) est sous forme d'une première tôle métallique, le procédé comprenant en outre, après l'étape a), l'assemblage de cette première tôle métallique avec une ou plusieurs autres tôles métalliques afin de constituer un interconnecteur (50.1).

## Patentansprüche

1. Struktur für eine elektrochemische Vorrichtung, insbesondere vom Typ Festoxid-Brennstoffzelle (SOFC) oder vom Typ Festoxid-Hochtemperatur-Wasserdampf-Elektrolyseur (SOEC), wobei die Struktur wenigstens ein leitendes Trägerelement (50) eines Verbindungselements (50.1) umfasst mit wenigstens einer ersten Fläche (50A), die wenigstens einen lokalisierten aufgerauten Bereich (52) aufweist, wobei der lokalisierte aufgeraute Bereich (52) einen arithmetischen mittleren Rauheitsparameter aufweist, der der arithmetischen mittleren Rauheit seines Profils entspricht, welche größer ist als der Rest der ersten Fläche, wobei der lokalisierte aufgeraute Bereich (52) in Kontakt mit einem isolierenden Verbindungsmaterial einer Dichtung steht.

2. Struktur nach Anspruch 1, wobei das isolierende Verbindungsmaterial (77), insbesondere auf Glas- oder Glaskeramikbasis, in Kontakt mit dem aufgerauten Bereich (52) des leitenden Trägerelements (50) angebracht ist, wobei die Struktur ferner einen isolierenden Träger (60) umfasst, der das isolierende Verbindungsmaterial (77), insbesondere auf Glas- oder Glaskeramikbasis, trägt oder aufnimmt.

3. Struktur nach Anspruch 2, wobei der isolierende Träger (60) eine zentrale Öffnung (61) aufweist, die dazu ausgebildet ist, wenigstens eine elektrochemische Zelle aufzunehmen, wobei das isolierende Verbindungsmaterial (77) in Form wenigstens eines Strangs vorliegt, der in Kontakt mit dem aufgerauten Bereich (52) steht und sich um die zentrale Öffnung (61) herum erstreckt.

4. Struktur nach Anspruch 3, wobei der isolierende Träger (60) eine oder mehrere periphere Öffnungen (62, 63, 64, 65) aufweist, die um die zentrale Öffnung (61) herum angeordnet sind, wobei das isolierende Verbindungsmaterial (77) in Form eines oder mehrerer weiterer Stränge vorliegt, die mit einem aufgerauten Bereich (52) in Kontakt stehen, wobei der eine oder die mehreren weiteren Stränge jeweils um die eine oder die mehreren peripheren Öffnungen (62, 63, 64, 65) herum verteilt sind.

5. Struktur nach einem der Ansprüche 3 oder 4, wobei der aufgeraute Bereich (52) auf der ersten Fläche eine Anordnung gemäß wenigstens einem vorgegebenen Muster aufweist, das eine oder mehrere geschlossene Konturen (C1, C11, C12, C13, C14) bildet, wobei der Strang oder die Stränge in Kontakt mit dem aufgerauten Bereich (52) in einem Muster angeordnet sind, das das vorgegebene Muster wiedergibt.

6. Struktur nach einem der Ansprüche 1 bis 5, wobei das leitende Trägerelement (50) mit wenigstens einer zweiten Fläche (50B) gegenüber der ersten Fläche (50A) versehen ist, die wenigstens einen weiteren lokalisierten aufgerauten Bereich (52) aufweist, wobei der weitere lokalisierte aufgeraute Bereich (52) auf der zweiten Fläche (50B) in Kontakt mit einer weiteren Dichtung gebracht ist.

7. Struktur nach Anspruch 6, wobei die weitere Dichtung zwischen dem Verbindungselement (50.1) und einem weiteren Verbindungselement (50.2) angeordnet ist, wobei die weitere Dichtung in Kontakt mit einem lokalisierten aufgerauten Bereich (52) steht, der an einer Fläche des weiteren Verbindungselements (50.2) ausgebildet ist.

8. Struktur nach einem der Ansprüche 1 bis 5, wobei das leitende Trägerelement (50) an einer ersten Hauptfläche eines elektrisch isolierenden Trägers (60) angeordnet ist, und wobei eine weitere Verbindungsleitung (50.2) an einer zweiten Hauptfläche des elektrisch isolierenden Trägers (60) gegenüber der ersten Hauptfläche angeordnet ist, wobei der isolierende Träger (60) mit wenigstens einer Öffnung (68) versehen ist, das mit dem isolierenden Verbindungsmaterial (77) der Dichtung gefüllt ist, wobei die Öffnung (68) durch die erste Hauptfläche und eine zweite Hauptfläche verläuft und sich zwischen diesen erstreckt, so dass das in der Öffnung (68) angeordnete isolierende Verbindungsmaterial (77) durch den elektrisch isolierenden Träger (60) hindurch verläuft und in Kontakt mit einem aufgerauten Bereich dieses weiteren Verbindungselements (50.2) angeordnet ist.

9. Verfahren zur Herstellung einer Struktur nach einem der Ansprüche 1 bis 8, umfassend die folgenden Schritte:
a) lokalisiertes Verändern der Oberflächenbeschaffenheit eines vorgegebenen Bereichs der ersten Fläche des leitenden Trägerelements (50), um diesen vorgegebenen Bereich aufzurauen,
b) Ausbilden der Dichtung an dem leitenden Trägerelement (50), wobei das isolierende Klebematerial, insbesondere auf Glas- oder Glaskeramikbasis, in Kontakt mit dem vorgegebenen Bereich angebracht wird.

10. Verfahren nach Anspruch 9, wobei die lokalisierte Veränderung durch Projektion von Kugeln oder Partikeln oder Körnern durch wenigstens ein Loch (101) einer Schutzmaske (100) durchgeführt wird, die gegenüber der ersten Fläche des leitenden Trägerelements (50) angeordnet wird, wobei das Loch (101) gegenüber dem vorgegebenen Bereich angeordnet wird.

11. Verfahren nach einem der Ansprüche 9 oder 10, wobei das leitende Trägerelement (50) die Form eines ersten Blechs hat, wobei das Verfahren ferner nach Schritt a) das Zusammenfügen dieses ersten Blechs mit einem oder mehreren weiteren Blechen umfasst, um ein Verbindungselement (50.1) zu bilden.

## Claims

1. A structure for an electrochemical device, in particular of the solid oxide fuel cell (SOFC) type or solid oxide high temperature steam electrolyser (HTSE) type, the structure comprising at least one conducting support element (50) of an interconnector (50.1) provided with at least one first face (50A) having at least one localised rough region (52), said localised rough region (52) having an arithmetic mean roughness parameter corresponding to the arithmetic mean of its profile which is higher than the rest of said first face, said localised rough region (52) being able to be contacted with an insulating bonding material of a seal.

2. The structure according to claim 1, wherein the insulating bonding material (77), in particular based on glass or glass-ceramic, is mounted in contact to said rough region (52) of the conducting support element (50), said structure further including an insulating support (60) which supports or accommodates the insulating bonding material (77), in particular based on glass or glass-ceramic.

3. The structure according to claim 2, wherein the insulating support (60) includes a central opening (61), adapted to accommodate at least one electrochemical cell, the insulating bonding material (77) being in the form of at least one bead in contact with said rough region (52) and distributed about said central opening (61).

4. The structure according to claim 3, wherein the insulating support (60) includes one or more peripheral opening(s) (62, 63, 64, 65) disposed about the central opening (61), the insulating bonding material (77) being in the form of one or more other beads in contact with a rough region (52), the other bead(s) being distributed about said one or more peripheral openings (62, 63, 64, 65) respectively.

5. The structure according to one of claims 3 or 4, wherein said rough region (52) has an arrangement on the first face according to at least one given pattern forming one or more closed perimeters (C1, C11, C12, C13, C14), the bead(s) in contact with said rough region (52) being arranged according to a pattern reproducing said given pattern.

6. The structure according to one of claims 1 to 5, wherein the conducting support element (50) is provided with at least one second face (50B) opposite to the first face (50A) having at least one other localised rough region (52), said other localised rough region (52) on the second face (50B) being contacted with another seal.

7. The structure according to claim 6, wherein the other seal is disposed between said interconnector (50.1) and another interconnector (50.2), the other seal being in contact with a localised rough region (52) formed on a face of this other interconnector (50.2).

8. The structure according to one of claims 1 to 5, wherein said conducting support element (50) is disposed against a first main face of an electrically insulating support (60), and wherein another interconnector (50.2) is disposed against a second main face of the electrically insulating support (60) opposite to the first main face, the insulating support (60) being provided with at least one port (68) filled with said insulating bonding material (77) of the seal, the port (68) being a through port and extending between the first main face and a second main face, such that the insulating bonding material (77) disposed in said port (68) passes through the electrically insulating support (60) and is disposed in contact with a rough region of this other interconnector (50.2).

9. A method for making a structure according to one of claims 1 to 8, comprising steps of:
a) locally modifying the surface state of a given region of the first face of the conducting support element (50), so as to roughen said given region,
b) forming the seal on the conducting support element (50), the insulating bonding material, in particular based on glass or glass-ceramic, the insulating bonding material being disposed in contact with said given region.

10. The method according to claim 9, wherein locally modifying is made by blasting balls or particles or grains, through at least one hole (101) of a protective mask (100) placed facing said first face of said conducting support element (50), the hole (101) being disposed facing the given region.

11. The method according to one of claims 9 or 10, wherein the conducting support element (50) is in the form of a first metal sheet, the method further comprising, after step a), assembling this first metal sheet with one or more other metal sheets in order to make an interconnector (50.1).
